# EUROPEAN PATENT APPLICATION

(11) **EP 1 792 667 A1**
(43) Date of publication of application: **06.06.2007**
(21) Application number: 05774714.9
(22) Date of filing: 25.08.2005
(51) Int. Cl.: B09B 3/00, B09C 1/06, A62D 3/00, B01D 53/70

(54) **PROCESSING APPARATUS, METHOD OF PROCESSING AND PROCESS FOR PRODUCING DETOXIFIED MATTER**

(30) Priority: 25.08.2004 JP 2004244920
(71) Applicant: Hoei Shokai Co. Ltd., Toyota-shi Aichi 4730932 (JP)
(72) Inventor: ABE, Tsuyoshi, HOEI SHOKAI CO., LTD., Toyota-shi, Aichi 4730932 (JP); MIZUNO, Hitoshi, HOEI SHOKAI CO., LTD., Toyota-shi, Aichi 4730932 (JP); SUZUKI, Kazunori, HOEI SHOKAI CO., LTD., Toyota-shi, Aichi 4730932 (JP)
(74) Representative: Waldren, Robin Michael
(86) International application number: PCT/JP2005/015398
(87) International publication number: WO 2006/022316

(57) **Abstract**

[OBJECT]

To efficiently and assuredly making an object to be treated containing an agricultural chemical innoxious.

[MEANS FOR SOLVING]

The first pipe which alkali can be filled thereto is disposed to be capable of being inserted and pulled out to a first passage of the first processing chamber where agricultural chemicals are thermally decomposed. Accordingly, since a distance between the processing chamber and the alkali can be minimized, a zone where the thermally decomposed components of the agricultural chemicals are recomposed into agricultural chemicals or dioxins is almost eliminated. As a result, the contamination owing to the re-composition thereof can be prevented. In addition, since the first pipe can be readily exchanged, the throughput can be improved. Furthermore, since when the first pipe is pulled out of the first passage of the processing chamber a first shielding member can shield the first passage, the vacuum in the processing chamber can be maintained and also in this point the throughput can be prevented from deteriorating.

## Description

### FIELD OF TECHNOLOGY

The present invention relates to a processing apparatus and a processing method of POPs (Persistent Organic Pollutants such as dioxins, PCBs and agricultural chemicals) and soil, sewage, low quality waste, fly ash, metal drums, concrete and activated carbon containing the POPs. The present invention relates to a processing apparatus that is capable of making POPs containing materials such as agricultural chemicals dug out from soil (for instance, agricultural chemicals remaining after use and non-registered agricultural chemicals) and mixtures of soil and agricultural chemicals innoxious and processing method thereof. The present invention also relates to manufacturing method of innoxious object.

### BACKGROUND OF THE INVENTION

So far, the agricultural chemicals have been used to remove pests in the course of cultivating agricultural products such as vegetables and rice. However, among the foregoing agricultural chemicals, chlorinated organic compounds such as PCP (pentachlorophenol) and chlordane, BHC (hexachlorocyclohexane), aldrin, dieldrin, endrin, DDT and PCNB have the addictiveness to human bodies. Moreover, they have adverse affects on livers and the like as they accumulate inside the human bodies. Also dioxins are likely to be mixed during the manufacturing process thereof. For those reasons agricultural chemicals are made illegal to be produced, used and sold at present.

As a large volume of agricultural chemicals had been stocked at the time when the agricultural chemicals were prohibited from producing by laws, the unused agricultural chemicals were buried in soil stuffed in paper bags or bottles.

However, recently, the agricultural chemicals (stock piles) high in the toxicity and buried in soil, have diffused in the soil and have caused situations where the agriculture cannot be carried out or the under ground water is contaminated. Accordingly, making the agricultural chemicals buried in the soil innoxious is demanded.

One method of making such soil innoxious is that to dig out the agricultural chemicals from the soil and making the dug out agricultural chemicals innoxious by treating thereof chemically (for instance, patent literature 1). However, there is a fundamental problem in that according to this process, the agricultural chemicals that have already been diffused in the soil cannot be processed. Furthermore, since, beside the agricultural chemicals, remains of the paper bags or bottles used to stuff the agricultural chemicals are contained in the dug out soil, process of removing the remains becomes necessary, which is problematic in both aspects of cost and technique.

Furthermore, not only for the agricultural chemicals but also for PCB-contaminated materials such as sewage, pressure-sensitive paper and wastes including PCB, POPs and soil, sewage, low quality waste, fly ash, metal drums, concrete and activated carbon that contain POPs, an effective processing method of making pollutants innoxious is not established as in the case of buried agricultural chemicals.
[Patent Literature] JP-A-2001-340881

### DISCLOSURE OF THE INVENTION

### PROBLEMS TO BE SOLVED

The present inventors found out that dioxins, POPs containing PCBs and other chlorinated organic compounds (for Instance, PCP (pentachlorophenol), HCB, BHC (hexachlorocyclohexane) and PCNB can be decomposed when heated in a vacuum. Owing to the invention, any of POPs can be remarkably reduced in the concentration of the residues after processing.

Furthermore, the inventors devised a technology that when thermally decomposed components of organic halides are neutralized with an alkali such as calcined lime and the decomposition components of the organic halides are fixed with the alkali, not only the organic halides themselves are inhibited from being recomposed but also the dioxins are inhibited from being recomposed; and also a technology where when an alkali such as calcined lime is inserted in a pipe that becomes a path between an hermetically sealed zone where vacuum heating is applied and a vacuum pump that reduces pressure of the hermetically sealed zone, the neutralization and fixation of the thermally decomposed components of the organic halides can be effectively carried out.

In the course of development of such technologies, the inventors found new problems to be solved described as below.
(1) In the pipe disposed between the hermetically sealed zone and the alkali, recomposing of organic halides occurs and contaminates the area.
(2) The alkali inserted in the pipe between the hermetically sealed zone and the vacuum pump has to be frequently exchanged, resulting in frequently stopping the process once for every exchanges which leads to deterioration in the throughput.
(3) The pipe is likely to be corroded with a chlorine gas.

The invention is carried out in view of such situations and an object of the invention is to provide a processing apparatus that can inhibit the thermally decomposed components of the organic halides from being recomposed into POPs containing dioxins and a processing method therefor.

Furthermore, another object of the invention is to provide a processing apparatus that can efficiently make the object to be treated innoxious and a processing method therefor.

### MEANS FOR SOLVING THE PROBLEM

The POPs in the present invention means persistent organic pollutants and include not only twelve compounds speculated in the Stockholm Convention but also ones containing other organic halides (for instance, PCP (pentachlorophenol), HCB, BHC (hexachlorocyclohexane) and PCNB).

In order to solve the above problems, a processing apparatus according to the invention adopts a configuration described below. In other words, the processing apparatus of the present invention comprises, a processing chamber, capable of being hermetically sealed to which an object to be treated containing organic halides being introduced, a heating means that heats at least a part of an inside of the processing chamber, an exhausting system for exhausting the processing chamber and a first alkali reaction portion disposed to at least a part of a zone of the exhausting system capable of inserting an alkali to an inside of the exhausting system: the first alkali reaction portion is capable of being inserted and pulled out from an outside.

According to another aspect of the present invention, a processing chamber, capable of being hermetically sealed to which an object to be treated containing organic halides being introduced, a heating means that heats at least a part of an inside of the processing chamber, a second alkali reaction portion disposed inside the exhausting system for exhausting inside the processing chamber and that is filled with alkali, a first alkali reaction portion disposed to be capable of being inserted and pulled out from an outside in at least a part of a zone of the exhausting system that is between the second alkali reaction portion filled with alkali and the processing chamber, capable of inserting alkali into the exhausting system.

The first alkali reaction portion may have an alkali heating means heating the alkali in a state when the alkali is being inserted into the exhausting system. As the object to be treated is heated while reducing pressure, the organic halides are dehalogenated and chlorines (or hydrochloric acid) are partially exhausted to the exhausting system side. According to the present invention, a recomposing of organic halides from off-gas containing chlorine and corrosion of a pipe of the exhausting system can be prevented by the first alkali reaction furnace of the present invention. In the present invention, the first alkali reaction portion can be exchanged by inserting alkali as a cartridge from the outside. Thereby, the alkali can be exchanged while the inside of the processing chamber maintaining a heated and reduced pressure state and with the object to be treated being processed continuously which leads to improved throughput.

In order to solve the above mentioned problem, the processing apparatus of the present invention comprises, a processing chamber, capable of being hermetically sealed, having a first passage that communicates between an inside and an outside of the processing chamber to which an object to be treated containing an organic halides being introduced, a heating means that heats at least a part of an inside of the processing chamber, a first pipe, capable of being pulled out and inserted in to the first passage from the outside of the processing chamber and communicates with the first passage when being inserted into the first passage, having a first path capable of being filled with an alkali, a first shielding member capable of shielding the first passage when the first pipe is pulled out of the first passage and a first pressure reducing means capable of reducing pressure inside of the processing chamber through the first path.

A method of processing POPs according to still another aspect of the present invention comprises, introducing an object to be treated into a first zone capable of being hermetically sealed, introducing an alkali into a second zone, communicates with the first zone, in which alkali can be exchanged easily but an area where gas passing therein that comes into contact with the alkali is small, introducing the alkali into a third zone, communicates with the second zone, and gas passing therein that comes into contact with the alkali is large but difficult to exchange the alkali, and, heating the first zone while reducing the pressure of the first zone through the second and third zones.

Still another object of the present invention is a method of producing innoxious object from the object to be treated comprises, introducing an object to be treated into a first zone capable of being hermetically sealed, introducing an alkali into a second zone, communicates with the first zone, in which alkali can be exchanged easily but an area where gas passing therein that comes into contact with the alkali is small, introducing the alkali into a third zone, communicates with the second zone, and gas passing therein that comes into contact with the alkali is large but difficult to exchange the alkali, and heating the first zone while reducing the pressure of the first zone through the second and third zones, and taking out the object to be treated that is heated under reduced pressure as an innoxious object.

Here, the object to be treated includes the POPs themselves, and soil, sewage, low quality waste, fry ash, metal drums, concrete and activated carbon that contain POPs. As the alkali, calcined lime (CaO), soda lime (CaO + NaOH), sodium carbonate and so on can be cited. In particular, calcined lime, being cheap and generating heat during a reaction, can be said a preferable material.

According to the present invention, the first pipe which alkali can be filled thereto is disposed to be capable of being inserted and pulled out to a first passage of the first processing chamber where POPs are thermally decomposed. Accordingly, since a distance between the processing chamber and the alkali can be minimized, a zone where the thermally decomposed components of the agricultural chemicals are recomposed into POPs compound or dioxins is almost eliminated. As a result, the contamination owing to the re-composition thereof can be prevented. In addition, a pipe on a downstream side than this side can be prevented from being corroded by chlorine or the like.

In addition, according to this invention, since the first pipe can be readily exchanged, the throughput can be improved. Furthermore, since when the first pipe is pulled out of the first passage of the processing chamber a first shielding member can shield the first passage, the vacuum in the processing chamber can be maintained and also in this point the throughput can be prevented from deteriorating.

According to the present invention, the processing chamber has a second passage communicating between the inside and the outside of the chamber and the processing apparatus has a second pipe, capable of being pulled out and inserted into from the outside of the processing chamber to the second passage and communicates with the second passage when being inserted into the second passage having a second path capable of being filled with the alkali and a second shielding member capable of shielding the second passage when the second pipe is pulled out of the second passage and the first pressure reducing means may be configured to be capable of reducing pressure inside the processing chamber through the second path. Thereby, even when the alkali in the first pipe is being exchanged, the object to be treated can be processed through the second pipe and vice versa. Accordingly, a continuous processing in the processing chamber can be realized thus throughput can be improved.

According to the present invention, a third path, being inserted between at least one of the first path and the second path and the first pressure reducing means, which is filled with the alkali may be provided. The third path is heated to a temperature in the range of approximately 600 °C to 1000°C. With this configuration, thermally decomposed components of POPS, which could not be fixed in the first or the second pipe, are further decomposed and eliminated halogens can be neutralized with the alkali to fix. Accordingly, the POPs can be made innoxious more assuredly.

In this invention, the third path may be configured to be formed by connecting a plurality of U-shaped pipes. When thus configured, the path can be collectively formed. Thereby, not only the throughput is improved but the energy efficiency also can be improved.

According to the present invention, at least one of the first passage and the second passage may be disposed on an upper surface side of the processing chamber. With this configuration, for example, at least one of the first pipe and the second pipe is disposed towards an upper side. Thus the path becomes densely filled with the alkali. For example, when the first pipe or the second pipe is disposed at a level, it is likely that, a space where the alkali is not filled may be formed on an upper portion of the path which results that the thermally decomposed components of the POPs go past the space and do not go through the alkali. On the other hand, according to the invention, since the alkali is filled densely in the path of the pipe, the thermall decomposed components of the POPs can be more assuredly neutralized and fixed.

According to the present invention, the processing chamber has a third pipe having a first input port on a first end side for inputting an object to be treated and a first screw disposed inside the third pipe may be disposed. Thereby, the process can be more assuredly carried out while transporting the object to be treated. As the screw, a spiral (hollow shafted screw) that does not have a shaft and where a space corresponding to a shaft is hollow can be used other than the shafted screw. For example, in the soil containing POPS, debris such as concrete is contained and the debris may clog the shafted screw where a space for transportation is relatively small. On the other hand, in the case where the hollow shafted screw being used, an object being transported can be prevented from clogging since there is a transportation space in the cavity as well.

The present invention may be provided with a fourth pipe disposed so as to be approximately parallel to the third pipe at a position lower than the third pipe and a first end side of the fourth pipe is connected to the second end side opposite to the first end side of the third pipe, a second screw disposed inside of the fourth pipe, a supporting means that cantilever supports the first end side of the third pipe and the second end side of the fourth pipe and a driving system disposed towards the supporting means side. The third pipe and the fourth pipe can be expanded since they include a space where being heated. In this invention, open ends of the third pipe and the fourth pipe can freely expand as being cantilever supported. In other words, since the third pipe and the fourth pipe on the screw driving system side do not expand, positional displacement between the screw driving system and the third pipe and fourth pipe is not caused. Although the screw driving system and the third pipe and the fourth pipe are vacuum sealed, as there is no positional displacement caused between the screw driving system and the third pipe and the fourth pipe, the performance of the vacuum seal can be secured, the vacuum of the third pipe and the fourth pipe can be secured, and the outside can be prevented from being contaminated.

The present invention may be provided with a fifth pipe disposed at a position lower than the fourth pipe and a first end side of the fifth pipe is connected to the second end side opposite to the first end side of the fourth pipe, having a first exhaust port on a second end opposite to the first end thereof, a third screw disposed inside of the fifth pipe and a cooling means that cools the fifth pipe, and the heating means may heat the third pipe and the fourth pipe. With this configuration, processed object exhausted from the first exhaust port is cooled, therefore, the vacuum seal disposed on the first exhaust port side is not deteriorated owing to heat.

In present invention, a first purge chamber having a second exhaust port connected to the second input port and the first input port through which the object to be treated is inputted, a first gate valve that opens and closes the second input port, a second gate valve that opens and closes the second exhaust port and a second pressure reducing means for reducing pressure inside of the first purge chamber may be provided. Thereby, a continuous processing can be applied to a batch i.e. a maximum amount of the object to be treated that can be inputted in the first purge chamber. Here, a fourth path, being inserted between at least one of the first purge chamber and the second pressure reducing means, which is filled with the alkali may be provided. Thereby, thermally decomposed components of the POPs that might be generated in the first purge chamber can be neutralized and fixed with the alkali. Furthermore, a transporting means that continuously transports the object to be treated from the first purge chamber to the processing chamber may be disposed. As the transporting means, a rotary valve or a screw conveyor can be used.

According to the present invention, a second purge chamber having a third exhaust port connected to the third input port and the second input port through which the object to be treated is inputted, a third gate valve that opens and closes the third input port and a third pressure reducing means for reducing pressure inside of the second purge chamber may be provided. Thereby, the object to be treated can be continuously processed.

According to the present invention, a third purge chamber having a fourth exhaust port thereof is connected to the first exhaust port and through which the object to be treated is exhausted, a fourth gate valve that opens and closes the fourth exhaust port and a fourth pressure reducing means for reducing pressure inside of the third purge chamber may be provided. Thereby, the vacuum inside the processing chamber can be maintained.

In the present invention, a dividing portion that controls comings and goings of the object to be treated to the processing chamber is disposed separately from the vacuum seal. Then, diameter of the opening of the gate valve is configured larger than that of the dividing portion, such as a rotary valve or a screw conveyor. With this configuration, the seal of the gate valve can be prevented from being contaminated with the object to be treated and a reduced pressure state of the device can be maintained.

In the present invention, a drying chamber that dries an object to be treated introduced into the processing chamber by heating under reduced pressure may be disposed. As the water content is removed from the object to be treated introduced in the processing chamber, the water does not go into the pressure reducing system from the processing chamber, the pressure fluctuation can be suppressed. Thereby the process can be stabilized.

In the present invention, means for inputting alkali into the processing chamber may be disposed. With such configuration, the inputted alkali performs the neutralization and fixation of the thermally decomposed components of the POPs to a certain extent in the processing chamber. Accordingly, the frequency of exchanging the alkali in the first, the second and the third paths can be reduced further. Further, the processing chamber can be prevented from being corroded.

A processing method of the POPs according to yet another aspect of the invention comprises, introducing an object to be treated and soil heated under a reduced pressure into a first zone of a path capable of being hermetically sealed, introducing an alkali in a second zone that communicates with the first zone of the path and, heating the path while reducing the pressure of the first zone through the second zone.

A method of processing according to still another aspect of the present invention is a method of processing an object to be treated containing organic halides comprises, introducing the object to be treated into a processing zone capable of being hermetically sealed, inserting an alkali from an outside into at least a part of the zone of the exhausting system which reduces pressure of the processing zone: the alkali is capable of being inserted and pulled out from an outside and heating the processing zone while reducing pressure in the processing zone through the alkali inserted into the exhausting system.

In addition a method of producing an innoxious object according to the present invention is a method of producing an innoxious object from an object to be treated containing organic halides comprises, introducing the object to be treated into a processing zone capable of being hermetically sealed, inserting an alkali, that is capable of being inserted and pulled out of, from an outside into at least a part of the zone of the exhausting system which reduces pressure of the processing zone and heating the processing zone while reducing pressure in the processing zone.

Manufacturing method of the soil heated under the reduced pressure is detailed in Japanese Patent No. 3076020. In addition, various kinds of alkali agents such as calcined lime and soda lime can be cited as the alkali. With the alkali, thermally decomposed components of the POPs are neutralized. In the present invention, as the object to be treated heated under reduced pressure is mixed with the soil heated under reduced pressure, the soil plays a role of suppressing a rapid increase of the pressure inside the path. In the same time, the soil functions as an alkali to fix the thermally decomposed components of the POPs and thereby suppresses the POP compounds themselves from being recomposed. Furthermore, dioxins are also prevented from being recomposed. In addition, in the invention, since such a process is carried out in a vacuum, an average mean free path becomes very long. Accordingly, the recombination can be effectively prevented. Furthermore, the soil works as a conductance (resistance) to a reduced pressure side, therefore, thermally decomposed components in the first zone does not rapidly flows into the second zone. Thereby, the thermally decomposed components of the POPs are not insufficiently neutralized in the second zone.

An operation of the soil suppressing a rapid increase in the air pressure in the path is owing to low thermal conductivity of the soil heated under the reduced pressure. When, for example, such soil is mixed with the POPs, in other words, when the POPs are dispersed through the soil, delay in time of the thermal conduction to the POPs largely fluctuate in accordance with the positions of the POPs in the zone. Thereby, the POPs in the zone do not reach simultaneously a particular temperature simultaneously and start reacting. On the contrary, the POPs in the zone start reacting with a temporal fluctuation. Therefore, according to the present invention, in the zone, the pressure can be suppressed from rapid increase and the rapid deterioration of the vacuum can also be suppressed. As a result, an average mean free path between thermally decomposed molecules becomes sufficiently long and thereby the recombination between the molecules can be suppressed.

In the invention, when the POPs such as the problematic agricultural chemicals are sealed in not only a vinyl bag but also a metal drum or a concrete reservoir, these can be inputted into the first zone as they are. The objects which are inputted as they are, are destroyed y heating under reduced pressure. The sealed POPs are processed in the first zone. With this configuration, the safety of an operator can be secured. This is because an operator is not required to take out the agricultural chemicals from the metal drum or the like. In this case, even when the soil is mixed, they can be introduced together in the first zone to be processed.

In this invention, the object to be treated is preferably mixed with an alkali before introducing thereof in the first zone. Thereby, thermally decomposed components of the POPs can be assuredly neutralized.

In the present invention, it is preferable to heat the inside of the exhausting system that reduces pressure of the first zone and thereby decompose the POPs or organic halides derived from the POPs. For example, not only a zone to which the object to be treated is introduced but also a heating portion provided in the middle of the exhausting system that exhausts the space or a predetermined portion of the exhausting system (including a case, for example, where an entire portion of a portion immediately behind the heating portion of the object to be treated to a portion immediately before the vacuum pump or a condenser is heated) is heated. Connecting pipes and valves of the respective portions are preferably heated as well. With this configuration, as the POPs are heated, the dioxins are prevented from being synthesized, or the dioxins contained in the agricultural chemicals or synthesized from the agricultural chemicals can be decomposed: the decomposition reaction includes a dehalogenation reaction. Furthermore, the POP compounds themselves can be prevented from being recomposed. It is considered that the facts that an average mean free path in a space where molecules are present becomes longer under the reduced pressure and the reducibility becomes larger prevent molecules to recompose.

A processing apparatus according to another aspect of the invention comprises a first zone where an object to be treated and soil heated under reduced pressure are introduced, a path, capable of being hermetically sealed, having a second zone which an alkali is introduced thereto and communicates with the first zone and a heating means that heats the path under reduced pressure.

As the path, for example, a pipe can be preferably utilized. It is more preferable to constitute by connecting a plurality of U-shaped pipes. When thus configured, the path can be collectively formed. Thereby, not only the throughput is improved but the energy efficiency also can be improved. Furthermore, since the U-shaped pipe is fixed at an upper portion but is free at a lower portion, the free lower portion plays a role of releasing an expansion of the U-shaped pipe caused by the thermal expansion. As a result, a positional displacement of a sealing portion at the upper portion of the U-shaped pipe becomes smaller, resulting in the improved sealing properties of the U-shaped pipe.

The present invention is configured not by simply connecting chambers, but a first zone where a mixture of an object to be treated and soil heated under reduced pressure is introduced to a path capable of being hermetically sealed and a second zone which an alkali is introduced thereto and communicates with the first zone are disposed. As the process is carried out on the path, the POPs are not thermally decomposed abruptly but can be thermally decomposed assuredly. Furthermore, the neutralization with the alkali can be surely carried.

In the present invention, the path may be constituted so as to have a third zone where soil heated under reduced pressure is introduced between the first zone and the second zone. The soil functions as a reducing agent and the presence of the soil in the zone also functions as the conductance of the pipe.

In this invention, it is preferable that at least a part of the pipe is disposed inside of the chamber. Furthermore, it is preferable that the chamber is divided by each of the respective zones.

Here, a method of processing POPs according to this invention comprises, introducing the POPs in a hermetically sealed zone and heating the POPs while reducing pressure inside of the hermetically sealed zone. The inventors found that the POPs such as PCP, BHC, chlordane and dieldrin can be decomposed as heating them in a vacuum. Any of the POPs can be remarkably reduced in concentration of the residues after processing.

Furthermore, a processing method according to the present invention further comprises decomposing the POPs or organic halides derived from the POPs not only by simply heating the POPs under reduced pressure but also by heating the inside of an exhaust system for reducing pressure inside of the hermetically sealed zone when processing the POPs. For example, not only a zone to which the object to be treated is introduced but also a heating portion provided in the middle of the exhausting system that exhausts the space or a predetermined portion of the exhausting system (including a case, for example, where an entire portion of a portion immediately behind the heating portion of the object to be treated to a portion immediately before the vacuum pump or a condenser is heated) is heated. Connecting pipes and valves of the respective portions are preferably heated as well. With this configuration, as the POPs are heated, dioxins can be prevented from being synthesized or the dioxins contained in the POPs can be decomposed: decomposition reaction includes a dehalogenation reaction. Furthermore, the POP compounds themselves can be prevented from being recomposed. It is considered that the facts that an average mean free path in a space where molecules are present becomes longer under the reduced pressure and the reducibility becomes larger prevent molecules to recompose.

The POPs may be mixed with the soil before being introduced in the hermetically sealed zone. The soil may be a soil heated under reduced pressure. In addition, other than the soil, the POPs may be mixed with an alkali.

In other words, the agricultural chemicals can be processed as original chemicals. However, when the agricultural chemicals are original chemicals or in a state close to the original chemicals and high in the concentration thereof, the agricultural chemicals are preferably mixed with a medium to process (as a matter of course, when the concentration is low a medium may be used to mix and process). Here, the agricultural chemical original means a chemical species itself that has an effect as the agricultural chemical, or one in a state normally distributed as the agricultural chemical (in some cases, other than the chemical species, a solvent, surfactant or mineral carrier is contained). As the media that are mixed with the agricultural chemicals, soil, soil once processed under reduced pressure, or various kinds of alkali agents such as calcined lime (CaO) and soda lime can be cited.

Furthermore, a method of processing the agricultural chemicals according to the present invention comprises digging out the agricultural chemicals buried in the soil, introducing the dug out agricultural chemicals into a hermetically sealed zone and heating the agricultural chemicals while reducing pressure of inside the hermetically sealed zone. In this case, the processed soil may be used as a processing medium of the above-mentioned agricultural chemicals (agricultural chemical original).

Still furthermore, processing method according to the present invention comprises, introducing the dug out agricultural chemicals and the soil into the hermetically sealed zone without separating one from the other. In the case of buried agricultural chemicals, for example, in many cases, soil, rocks, containers and wrappings are mixed therein. According to the processing method of the present invention, even those foreign matters are being mixed, the object to be treated can be processed as they are without any particular pre-treatment.

The invention relates to a processing method of an agricultural chemical containing at least one kind of organic halides. The processing method comprises, introducing the agricultural chemical in a hermetically sealed zone, heating the agricultural chemical while reducing pressure of inside the hermetically sealed zone and replacing the hermetically sealed zone with a non-oxidizing gas. After the agricultural chemical is processed, when the hermetically sealed zone is returned to initial pressure with a gas containing oxygen or a gas having the dioxin generation properties, the dioxins may be recomposed. According to this invention, by returning the pressure (purging) with a non-oxidizing gas that is free from dioxin (deficient in the dioxins) and does not have the dioxin-generating properties, the problem is overcome. Since the POPs agricultural chemicals contain dioxins, such configuration is effective.

The processing method may further comprises the step of, reacting halogens generated from the organic halides or compounds thereof (for example, hydrochloric acid or the like) with an alkali under reduced pressure or normal pressure. The reaction portion may be heated.

A processing method of agricultural chemicals according to the present invention comprises, introducing an object to be treated containing an agricultural chemicals, dioxins and an organic solvent into a hermetically sealed zone, heating while reducing pressure of inside the hermetically sealed zone to evaporate the organic solvent or the agricultural chemicals, and heating the hermetically sealed zone further to decompose the dioxins. The agricultural chemicals evaporated in the hermetically sealed zone may be heated so as to decompose in a second hermetically sealed zone connected to the hermetically sealed zone. As such a configuration being adopted, even the agricultural chemicals high in the volatility or the agricultural chemicals dissolves or disperses in various kinds of organic solvents such as illuminating kerosene, benzene and cyclohexane can be processed. That is, even when the agricultural chemicals high in the volatility such as chlordane or PCP are exhausted without decomposing from the first hermetically sealed zone, the decomposition can be carried out in the second hermetically sealed zone.

The present invention relates to a method of manufacturing an organic compound having M halogens (M < N, M is an integer equal to zero or more) from an organic compound having N halogens. The method comprises heating the organic compound having N halogens under reduced pressure to at least partially eliminate the N halogens.

Furthermore, the invention relates to a method of processing organic halides comprises, at least partially eliminating, under reduced pressure, halogens that constitutes the organic halides and reacting the eliminated halogens or a compound thereof with the alkali to generate a salt of the alkali.

In addition, the invention relates to a method of processing an agricultural chemical containing organic halides that comprises heating the organic halides under reduced pressure so that chlorines constituting the organic halides may be partially eliminated and fixing the eliminated chlorines and hydrochloric acid derived from the chlorines with alkali.

The inventors found that when the dioxins are heated under vacuum, dehalogenation reaction is caused and the dioxins are decomposed. For example, there are isomers having four, five, six, seven and eight chlorines for the dioxins known as PCDDs. For example, when OCDD, dioxin having eight substituted chlorines is heated in a vacuum, separately from a decomposition of a skeleton itself made of carbons and oxygens, while chlorines are eliminated to generate molecules having 0 to 7 chlorines, the skeleton is also decomposed. This is considered because in a state of heating under reduced pressure the chlorine is readily eliminated and the atmosphere is a reducing atmosphere.

Among TeCDDs that are four substituted dioxins, 2, 3, 7, 8-TeCDD is said have the highest toxicity. When TeCDDs are generated from the OCDD owing to the dehalogenation, from a viewpoint of statistical mechanics, all positions are individual in the substitution of chlorine, therefore, the probability of generating 2, 3, 7, 8-TeCDD among TeCDDs becomes small. Furthermore, when the dehalogenation proceeds, compounds smaller than 3 in the substituted halogens are generated. However, these compounds are non-toxic according to factors (TEF) determined by WHO.

The situations of chlorinated organic compounds such as chlordane or PCP and organic halides such as brominated dioxin are similar. That is, when the organic halides are heated under reduced pressure, chemical substances with less toxicity or free from toxicity can be generated.

The halogens such as eliminated chlorines are preferably reacted with an alkali such as calcium hydroxide or sodium hydroxide to fix as a salt. This is because in the case of an alkali scrubber, processing with water is necessary, however, from a viewpoint of doing without the water process, solid alkali is preferably used. Furthermore, from a viewpoint of preventing apparatus from being corroded by chlorine, dechlorinated chlorines and hydrochloric acid derived from the chlorines are preferably reacted with alkali as soon as possible.

In order to improve the reactivity between solid-state alkali and chlorines in a vacuum, the smaller a particle diameter of the alkali is and the larger the specific surface area thereof is the better. However, when the particle diameter is made excessively small, in some cases, the solid alkali is evacuated with a vacuum pump and the conductance of the pipe becomes too large: accordingly, the particle diameter is preferably in the range of substantially several millimeters to substantially several centimeters.

A processing apparatus according to the present invention is the one that can realize a processing method according to the invention as mentioned above. In other words, the present invention relates to a processing apparatus that can process an object to be treated containing organic halides comprises a first hermetically sealed zone where the object to be treated is accommodated and can be heated, an exhausting system that can reduce pressure inside of the first hermetically sealed zone, a second hermetically sealed zone disposed between the first hermetically sealed zone and the exhausting system and can heat fractions generated by heating the object to be treated, and a reaction chamber disposed any place between the second hermetically sealed zone and the exhausting system and inside of which is filled with solid alkali. The second hermetically sealed zone has not only a function of neutralizing halogens but also a function of heating and decomposing dioxins derived from the object to be treated and agricultural chemicals. For example, the time period between when heating the object to be treated began until the temperature reaches to a predetermined value, it is likely that the agricultural chemicals are evaporated to move the exhausting system. When the second hermetically sealed zone is being heated, it can also function as a processing apparatus of such an exhaust gas.

In other words, the present invention relates to a processing apparatus that can process an object to be treated containing organic halides comprises a first hermetically sealed zone where the object to be treated is accommodated and can be heated, an exhausting system that can reduce pressure inside the first hermetically sealed zone, a second hermetically sealed zone disposed between the first hermetically sealed zone and the exhausting system and can heat fractions generated by heating the object to be treated, and a reaction portion disposed in any place between the second hermetically sealed zone and the exhausting system and inside of which is filled with solid alkali. As mentioned above, in the invention, not only a space where the object to be treated is heated but also a predetermined portion immediately before the exhaust pump is preferably heated. With this configuration, as the agricultural chemicals such as POPs are heated, the dioxins are prevented from being synthesized, or the dioxins contained in the agricultural chemicals or synthesized from the agricultural chemicals can be decomposed: the decomposition reaction includes a dehalogenation reaction.

In some cases, agricultural chemicals evaporates rapidly evaporate when heated in vacuum. Accordingly, when an amount of evaporation is not controlled, a very large processing system becomes necessary as the system to follow up the process.. For this reason, when processing capacity of the processing apparatus that processes the evaporated agricultural chemicals is considered, a flow amount of evaporated gas to the processing apparatus has to be adequately controlled.

On the other hand, although the dioxins contained in the agricultural chemicals can be decomposed by the vacuum heating, from a viewpoint of suppressing the re-synthesis thereof as low as possible, it is found according to the experiments carried by the inventors that such valve is also necessary to be heated to for example approximately 400°C. Accordingly, various kinds of members that are used in such a process are required to be very high in the heat resistance. Furthermore, a zone low in the temperature exists in a zone where a gas containing dioxins flows, concentrations of the dioxins or precursors thereof become high in the zone where a temperature is low, and thereby a problem is caused in that condensation or re-synthesis thereof tend to occur.

The inventors of the present invention have proposed a technology which the dioxins (PCDDs, PCDFs and Co-PCB), brominated dioxin, PCB, agricultural chemicals (PCP, chlordane, BHC and HCB) and other POPs are heated in vacuum to decompose. Thereby, it is confirmed that all the agricultural chemicals can be largely reduced in the concentration in the residues after processing. The invention is particularly useful in applying to such technology.

A main aspect of the invention is a processing system comprises a first processing portion having a heating means and processes an object to be treated containing at least a organic halides, a second processing portion communicated with the first processing portion and neutralizes halogens derived from the object to be treated, a pressure reducing means that communicates with the second processing portion, and a first valve, disposed between the first processing portion and the second processing portion, that controls at least a flow of a gas.

Here, when an object to be treated containing organic halides (for example, dioxins and organic halides such as PCP and chlordane) is inputted in the first processing portion, the object to be treated is processed in the first processing portion that is reduced with pressure by the first valve and the pressure reducing means which is communicated with the first processing portion through the first valve and the second processing portion and that is heated with the heating means. Evaporated materials in the first processing portion are pulled as they are in the second processing portion due to a pressure difference owing to a pressure reducing means such as a vacuum pump. In the first or second processing portion, organic halides derived from the object to be treated are dehalogenated and decomposed. Then, the eliminated halogens are neutralized. In the invention, a flow of a gas from the first processing portion to the second processing portion is controlled through a first valve disposed between the first processing portion and the second processing portion. Accordingly, since the flow is controlled to the processing capacity in the second processing portion, the decomposition can be assuredly carried out and eliminated halogens can be neutralized. As a result, according to this invention, harmful organic halides such as agricultural chemicals and dioxins can be assuredly made innoxious.

In the present invention, the first processing portion has a heating means. However, a configuration that an entire processing system is heated is more preferable. Thereby, the organic halides can be restricted from condensing in a system such as a pipe. Here, an environment for restricting the organic halides from condensing is an environment in which temperature and pressure conditions that can prevent the organic halides from condensing or can accelerate the thermal decomposition of the condensed organic halides. For example, dehalogenation reaction of organic halides begins, in vacuum, (at pressure of approximately 70000 to approximately 1 × 10⁻⁵ Pa) at a temperature from approximately 250°C to approximately 300°C. In the range of approximately 300°C to approximately 400°C, the dehalogenation reaction occurs efficiently, and at a temperature equal to or more than approximately 400°C the dehalogenation reaction can occur more efficiently. In a side where temperature being even higher, not only the dehalogenation reaction, but also evaporation of the dioxins, decomposition of the skeleton and elimination of oxygen combined with a plurality of benzene nuclei are caused. In the residue from the vacuum processing at a temperature equal to or more than approximately 600°C to substantially 700°C, the dioxins are hardly detected. The invention is achieved based on such experimental findings obtained by the inventors.

As a method of heating in entirety, a heater is disposed to a cracking furnace that may be disposed to, for example, a first processing portion and a second processing portion or a preceding stage of the second processing portion, and deliberately not disposing a heater to the first valve may be heated using the heat from the heater. Thereby, the energy efficiency can be improved and the configuration can be simplified. Needless to say, however, the heater may be disposed to the first valve itself. In any forms, the means correspond to a mean for heating the first valve. As mentioned above, although a cracking furnace may be disposed in the preceding stage of the second processing portion, there is no need of deliberately disposing such furnace. On the other hand, the preceding stage of the first processing portion may be provided with a purge chamber.

The present invention is that the processing system further comprises a condensor, communicated with the first processing portion, condenses and recovers the evaporated materials of metals contained in the object to be treated. The object to be treated frequently contains heavy metals such as lead, zinc, cadmium, arsenic and mercury. In such case, by having the condenser of the above configuration communicate with the first processing portion, those metals can be recovered in the same time.

In the present invention, the processing system is configured such that the condensor is connected to the second processing portion through the second valve that controls at least a flow of a gas.

When the organic halides derived from the object to be treated are contained in air exhausted from the condenser, the organic halides derived from the object to be treated can be processed in the second processing portion by connecting the condenser to the second processing portion. Furthermore, when the condenser is connected to the second processing portion through the second valve, since the processing capacity can be controlled to that of the second processing portion, the organic halides can be assuredly decomposed and eliminated halogens can be assuredly neutralized.

The valve according to this invention comprises, a main body having a pair of a valve plug and a valve sheet that opens and closes a path where a gas passes and provided with a passage that passes through to an outside, means for forming an environment inside the valve body such that to restrict the condensation of the organic halides, a rod member disposed so that to be capable of moving forwards and backwards through the passage and connected to the valve plug, and a bellows disposed in the periphery of the rod member so as to isolate the rod member from a zone in the valve body and made of a member that can stand the environment. Furthermore, in order to match axes of the valve plug and the valve sheet during operation, the valve plug is preferably provided with a guide that fits in the passage of the valve sheet.

Here, "means that makes the inside of the valve body an environment that restricts the organic halides from condensing" is means that makes the inside of the valve body a high temperature state, reduces pressure inside of the valve body or replaces the inside of the valve body with an inert gas.

According to the invention, an environment that restricts the organic halides from condensing, for example, having the bellows constituted of a member that can stand the high temperature environment. Therefore, the valve can be used in a high temperature state. Furthermore, since the bellows is disposed in the periphery of the rod member so as to isolate the rod member from the zone inside of the valve body, the bellows can perform both of the processes of sealing the passage leading to the outside and condensation to the rod member. Accordingly, the valve according to the present invention can prevent the organic halides from condensing.

A valve according to another aspect of the invention comprises, a pair of a valve plug and a valve sheet that opens and closes a passage where a gas passes through and the valve plug and a contact surface with the valve sheet side being made of a metal and means of having the inside of the main body of the valve an environment such that the condensation of the organic halides is restricted.

In this invention, since the valve plug and the contact surface with the valve sheet side are made of metal, even when the inside of the valve body is set to an environment that restricts the organic halides from condensing such as a high temperature, a definite opening function can be provided. On the other hand, in a case where the valve plug and the contact surface with the valve sheet side are made of metal, high accuracy may be needed to secure the tightness when closed. However, for example, the valve used in the above processing system is not necessarily required to have the complete tightness and is only required to be able to control a flow rate of a gas. Therefore, it can be used as the best valve for this kind of system. As the valve plug, copper, copper alloy, nickel, gold, silver or palladium can be named as examples.

The foregoing respective valves can be preferably inserted between, for example, the first and/or the second valve and the third path.

A method according to another aspect of the present invention relates to a method of processing the agricultural chemicals comprises, introducing the agricultural chemicals in an hermetically sealed zone and heating the agricultural chemicals while reducing pressure inside of the hermetically sealed zone. Here, the hermetically sealed zone is preferable to be indirectly heated from an outside. With such configuration, decomposition behavior of the agricultural chemicals becomes mild and the heating is gradually applied. Therefore, time period from the start of the decomposition to the completion thereof can be extended which is preferable for maintaining vacuum state.

According to an embodiment of the present invention, the exhaustion for reducing pressure inside the hermetically sealed zone is carried out through a first portion where a first heat medium having a first pressure loss is filled and a second portion where a second heat medium having a second pressure loss smaller than the first pressure loss is filled.

It is found that, thereby, a large pressure variation in the exhausting system accompanying the decomposition and the evaporation of the agricultural chemicals can be avoided, and a stable vacuum state can be realized. This configuration is particularly effective when concentration of organic compounds such as agricultural chemicals and PCBs are relatively high (As for the dioxin-contaminated soil, a chemical concentration thereof normally turns out extremely low, even in a case of high-level contamination). When the pressure fluctuates largely and the vacuum is low, for example, when the worst pressure comes near the atmospheric pressure, the generation probability of the organic halides such as dioxins becomes high and an advantage of depressurization is diminished. Accordingly, although the decomposition rate of the organic halides deteriorates, the invention can avoid such situations. Moreover, the first portion is, for example, vacuum heating (first heat medium) may be filled and in the second portion the alkali such as calcined lime CaO (second heat medium) may be filled. It is not excluded to use soil heated in vacuum mixed with alkali to fill the first portion.

According to an embodiment of the present invention, the first and second heat media are the alkali.

Thereby, in addition to the above advantageous effects, halogens generated owing to the dehalogenation and decomposition of the agricultural chemicals are fixed by the alkali as salts, accordingly, the halogens are fixed at an upstream side (when the exhaust side is taken as a downstream side). In addition to an effect of vacuum, such that an average mean free path is longer than that in the neighborhood of atmospheric pressure, there is a positive effect that generation of dioxins and other organic halides in the exhausting system can be very effectively suppressed.

A processing apparatus according to another aspect of the present invention is a processing apparatus that can process an object to be treated containing organic halides comprises a first hermetically sealed zone capable of accommodating and heating the object to be treated, a vacuum pump that can reduce pressure inside of the first hermetically sealed zone, a second hermetically sealed zone disposed between the first hermetically sealed zone and the vacuum pump capable of heating fractions generated by heating the object to be treated, a first portion disposed at any position between the first hermetically sealed zone and the second hermetically sealed zone and being filled with a first heat medium having a first pressure loss, and a second portion filled with a second heat medium having a second pressure loss smaller than the first pressure loss.

Here, at least one of the first heat medium and the second heat medium is preferably alkaline.

### [EFFECTS OF THE INVENTION]

According to the invention, an object being processed containing POPs can be efficiently and assuredly made innoxious.

### [BEST MODE FOR CARRYING OUT THE INVENTION]

Hereinafter, embodiments of the present invention will be described with reference to the drawings.

### (The first embodiment)

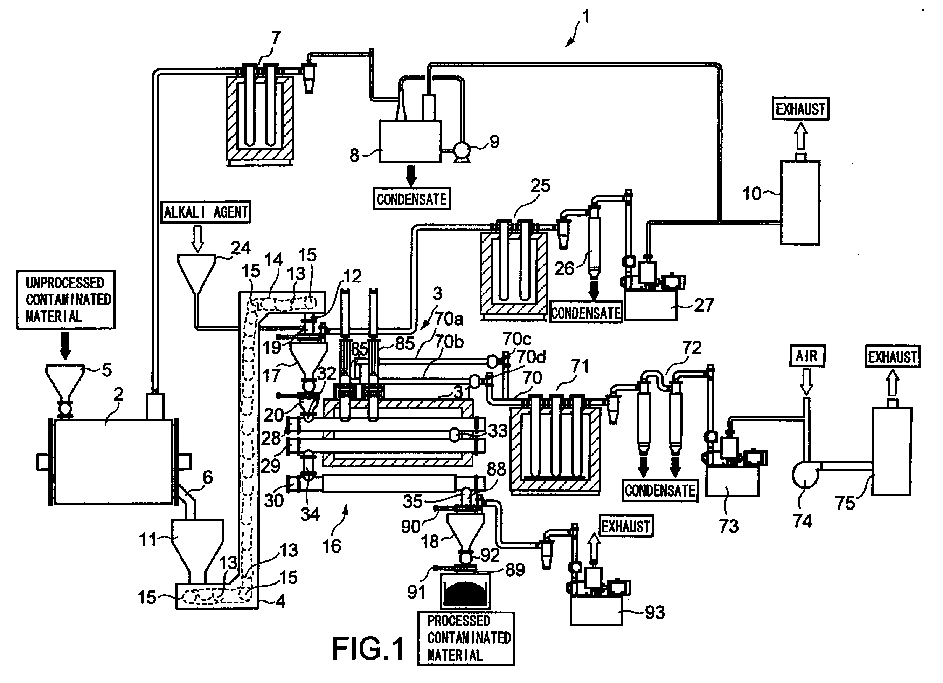

FIG. 1 is a diagram showing a configuration of a processing apparatus according to a first embodiment of the invention. Here, a processing of POP agricultural chemicals and soil containing POP agricultural chemicals is exemplified. However, the inventors have confirmed that PCB sewage, dioxin-contaminated soil, dioxin-contaminated low qualities and fly ash can be processed with a similar type of processing apparatus.

The processing apparatus 1 is mainly comprised of a vacuum drying furnace 2, a vacuum heating means 3, and a conveyor 4 that transports an object to be treated from the vacuum drying furnace 2 to the vacuum heating means 3.

Here, as an object to be treated that is treated by the processing apparatus 1, agricultural chemicals or soil containing agricultural chemicals is preferable, and fine soil previously selected by sieve selection is more preferable. More specifically, the debris such as concrete is preferably removed by sieve selection from the object to be treated. The sieve selection is not necessary in theory, however, by limiting the nature of the object to be treated, a high throughput can be obtained.

The vacuum drying furnace 2 has an input port 5 at an upper portion of one end, through which the object to be treated is inputted and an exhaust port 6 through which the object to be treated is exhausted at a lower portion of the other end. In the vacuum drying furnace 2, for instance, a conveyor (not shown) as a transporting means that transports the object to be treated inputted from the input port 5 up to the exhaust port 6 is disposed.

The vacuum drying furnace 2 removes moisture content from the object to be treated inputted therein. An alkali reactor 7 and an ejector pump comprised of a combination of a condensing device 8 and a pump 9 are connected to the vacuum drying furnace 2 in this order. Inside of the vacuum drying furnace 2 is reduced in pressure by an exhaust gas processing unit 10 through the alkali reactor 7 and the condensing device 8.

The alkali reactor 7 have chlorines that is eliminated from the buried agricultural chemicals and the dioxins react with calcined lime (CaO) or soda lime (CaO + NaOH) to neutralize and form salt. Even when the POPs such as chlordane are exhausted undecomposed, since chlorines are released in the presence of alkali, the chlorines as well are captured as salts. A configuration of the alkali reactor 7 will be described below.

The condensing device 8 cools water content or the like evaporated from the object to be treated to condense. For example, gas introduced from the alkali reactor 7 is indirectly heat exchanged with a cooling medium such as cooling water or brine to condense. Since gas that contain S water in particular is efficiently heat-exchanged to condense at a low temperature, a reaction product can be captured as much as possible.

The exhaust gas processing unit 10 processes an exhaust gas with, for instance, an activated carbon filter. This is used to apply double safety (fail-safe).

The conveyer 4 has an input port 11 connected to the exhaust port 6 of the vacuum drying furnace 2 at one end thereof, and an exhaust port 12 disposed at the other end thereof. Since the input port of an object to be treated of the vacuum heating means 3 is located at high position, the exhaust port 12 is positioned higher than the input port 11. Accordingly, the conveyer 4 transports the object to be treated from the lower place to the higher place. Inside of the conveyer 4, a conveyer loop 14 where pockets 13 that house the objects to be treated provided at a predetermined separation and a sprocket 15 that drives the conveyer loop 14 are disposed.

The vacuum heating means 3 has a main body of a vacuum heating apparatus 16 and purge chambers 17 and 18 disposed in front of the vacuum heating apparatus 16 and behind the vacuum heating apparatus 16.

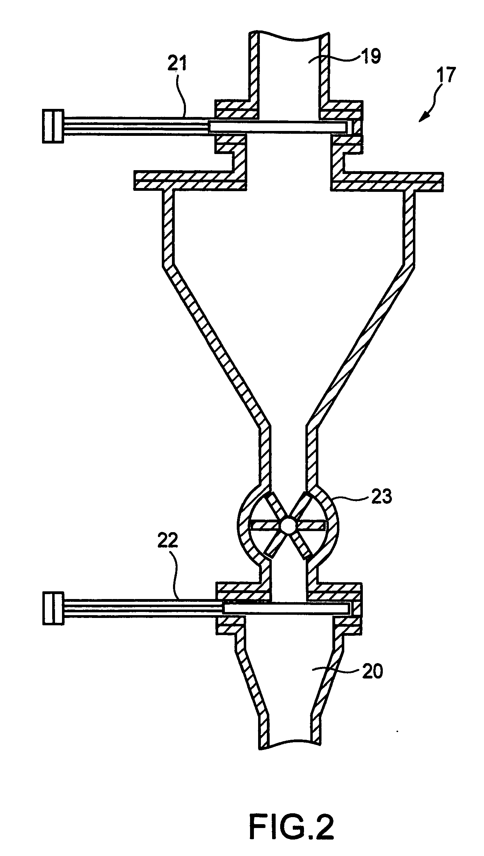

Here, the purge chamber 17, as shown in FIG. 2, includes an input port 19 of the object to be treated, which is connected to the exhaust port 12 of the conveyer 4, and an exhaust port 20 of the object to be treated that is connected to the main body of the vacuum heating apparatus 16. The input port 19 and the exhaust port 20 are provided with gate valves 21 and 22 respectively. The exhaust port 20 is provided with a dividing unit such as a rotary valve 23 or a screw conveyer for continuously inputting the object to be treated to the main body 16 in batch.

The input port 19 is connected to an alkali input port 24 as an alkali inputting means for inputting an alkali such as calcined lime that is mixed with the object to be treated inputted into the input port 19.

To the purge chamber 17, an alkali reactor 25, a condenser 26 and a vacuum pump 27 are connected in this order. The inside of the purge chamber 17 is reduced in pressure with the vacuum pump 27 through the alkali reactor 25 and the condenser 26. An exhaust gas of the vacuum pump 27 is exhausted through the exhaust gas processing unit 10 commonly used with the vacuum drying furnace 2.

The main body of the vacuum heating apparatus 16 is comprised of a first heating furnace 28, a second heating furnace 29 and a cooling device 30 made of pipes and each of the three pipes are disposed in parallel to each other lined up from top to down.

As for the first heating furnace 28 and second heating furnace 29, the main portion thereof is enclosed in a casing 31. The first heating furnace 28 and the second heating furnace 29 are heated in the casing 31 with an electric heater omitted from showing. The heating means may be one that externally and indirectly heats a space where the object to be treated is present. In the cooling device 30, for instance, with a water-cooling pipe (not shown) an outer periphery of which is covered and where cooling water is circulated, water-cooling type cooling is performed.

The first heating furnace 28, the second heating furnace 29 and the cooling device 30 are cantilever-supported, for instance, at one end on a left side in the drawing, and the other ends thereof are set free. The other end is made to be capable of being expanded and contracted against the thermal expansion and contraction.

The first heating furnace 28 has an input port 32 connected to the exhaust port 20 of the purge chamber 17 on the side of the cantilever-supported end. On an open-end side that is opposite to the cantilever-supported end of the first heating furnace 28, the first heating furnace 28 and second heating furnace 29 are connected through a connecting pipe 33. The second heating furnace 29 and the cooling device 30 are connected through a connecting pipe 34 on the cantilever-supported end side. The cooling device 30 has an exhaust port 35 for the object to be treated on an open-end side opposite to the cantilever-supported end side connected to the purge chamber 18.

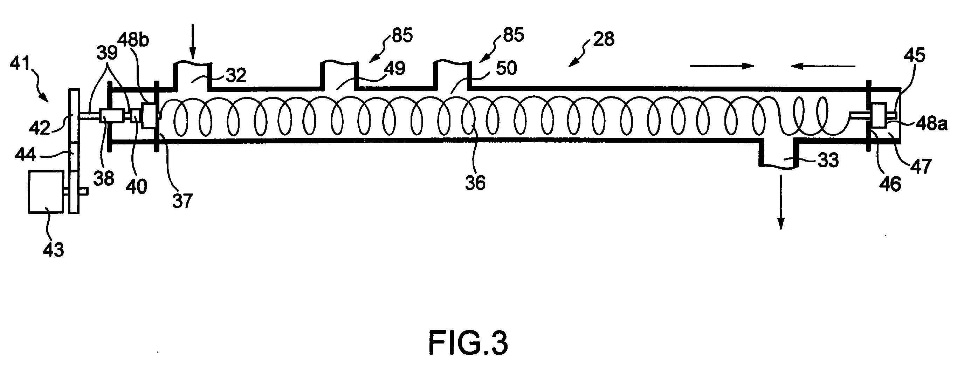

FIG. 3 is a sectional view showing specific configuration of the first heating furnace 28. Since the configurations of the second heating furnace 29 and the cooling device 30 are substantially the same as the above except for a configuration of a retort described later, explanations thereof will be omitted.

Inside of the first heating furnace 28, a screw 36 that transports an inputted object to be treated from right to left in the drawing is disposed. As the screw 36, for example, a hollow-shafted spiral conveyer or a shafted screw can be used.

The screw 36 is connected to a driving shaft 37 on the cantilever-supported side inside of the first heating furnace 28. The shaft 37 connects the inside and outside of the first heating furnace 28 and is connected to a shaft 39 held by bearings 38, 48a and 48b with a dust seal via an universal joint 40. Thereby, deterioration of seal properties caused by the bearing 38 receiving an external force can be prevented.

The shaft 39 is driven by a driving system 41 disposed outside the first heating furnace 28. The driving system 41 has a sprocket 42 connected to the shaft 39, a driving motor 43, and a chain 44 stretched between the sprocket 42 and the driving motor 43.

The screw 36 is connected to a bearing shaft 45 on an open-end side inside of the first heating furnace 28. The shaft 45 is extracted to a bearing chamber 47 partitioned with a partition plate 46 from a space where the screw 36 is disposed and held by the bearing 48a with the dust seal, which is disposed on a side of the partition plate 46 inside of the bearing chamber 47.

The screw 36 is disposed so that, with above the connecting pipe 33 connected to the second heating furnace 29 as a boundary, on a left side therefrom in the drawing, an object to be treated may be transported from the left (upstream) to the right (downstream), and, on a right side therefrom in the drawing, the object to be treated may be transported from the right to the left. With this configuration, the object to be treated inside of the first heating furnace 28 can be prevented from overriding above the connecting pipe 33 to flow into the right side in the drawing.

At two positions in an upper portion on an upstream side inside of the first heating furnace 28, a passage 49 and a passage 50 connecting the inside and outside of the furnace are disposed. The pipes of retort disposed so that to be capable of being pulled out and inserted in to the passages 49 and 50 respectively. Thus, when the retort 85 is disposed to the first heating furnace 28 and on the upstream side thereof, the extent that the first heating furnace 28 on the downstream side therefrom, the second heating furnace 29 and the cooling device 30 being contaminated with thermally decomposed components of the agricultural chemicals can be made relatively small. Furthermore, since the retort 85 is disposed close to the cantilever-supported side, displacement of the retort owing to the thermal expansion hardly difficult occurs, vacuum leakage in the main body of vacuum heating apparatus 16 can be prevented.

FIG.4, FIG.5, and FIG.6 are diagrams showing a configuration of an alkali-base retort. FIG. 4 shows a state where pipes of the retort are inserted in both of the passage 49 and the passage 50, FIG. 5 shows a state where the pipe of the retort is inserted in the passage 49 and the pipe of the retort is pulled out of the passage 50, and FIG. 6 shows a state where the pipe of the retort is pulled out of the passage 49 and the pipe of the retort is inserted in the passage 50.

A top end (open end) of the pipe 51 of the retort 85 is configured to be capable of being pulled out from and inserted in to the passage 49. The retort 85, in order to force a contact between the alkali filled inside thereof and a gas passing therethrough, is attached directed toward an upper direction from a top surface side of the heating furnace 28 (there is no need of being vertical and only necessary to achieve a state where the alkali is filled over an entire surface of the retort). At the top end of the pipe 51, a ventilatable porous filter 52 made of, for example, ceramics is attached. Then in the pipe 51, the alkali 53 such as lime is filled. As the alkali 53, solid-state alkalis (for example, calcined lime (CaO) or soda lime) are filled. Thereby, halogens such as chlorines derived from organic halides can be neutralized and fixed as salts. Furthermore, it is known that chlordane, for example, is decomposed releasing chlorines when brought into contact with the alkali. Accordingly, even the chlordane reached as far as the alkali reactor, it is decomposed in the reactor and the eliminated chlorines can be fixed as well. Still furthermore, halogens are neutralized and fixed using the retort 85 of such structure and fixed as salt, an exchange frequency of the alkali in an alkali reactor 71 described later can be reduced. Thereby, a continuous operation of the vacuum heating apparatus 3 can be realized over long term and throughput can be improved. In addition, contamination of the pipes 70a and 70b until it reaches to the alkali reactor 71 and extent of corrosion of the pipes owing to an acidic gas such as chlorine can be reduced. Furthermore, the pipes 70a and 70b may be provided with a heating means such as a mantle heater (pipe heater). Thereby, the evaporated content can be effectively prevented from condensing to the pipes 70a and 70b. Further, for example, copper packing can be prevented from being corroded leading to improved sealability.

The pipe 51 is housed in the casing 54. The pipe 51 can be inserted and removed from the passage 49 as driven by a cylinder 55 disposed at an upper portion of the casing 54.

The casing 54 is provided with a shielding door 56 to clog the passage 49 when the pipe 51 is pulled out of the passage 49. The shielding door 56 is opened and closed by use of a cylinder not shown in the drawing. The casing 54 is provided with a partially expandable cornice portion 57 between the shielding door 56 and the passage 49.

At an upper portion of a circumferential portion of the pipe 51, a passage 58 communicates with a path inside of the pipe 51 is disposed. An exhaust port 69 is disposed at a position that faces the passage 58 of the casing 54 when the pipe 51 is inserted into the passage 49. The exhaust port 59 is connected to the pipe 70a.

Further, a structure of the retort 85 to the passage 50 is entirely the same and comprised of a pipe 61, a filter 62, a casing 64, a cylinder 65, a shielding door 66, a cornice portion 67, a passage 68 and an exhaust port 69. The exhaust port 59 is connected to the pipe 70b.

The filter 62, while having sufficient ventilation properties, can hold an alkali agent and is made of materials having heat resisting property. Here, a foam material made of such as porous ceramics is adopted.

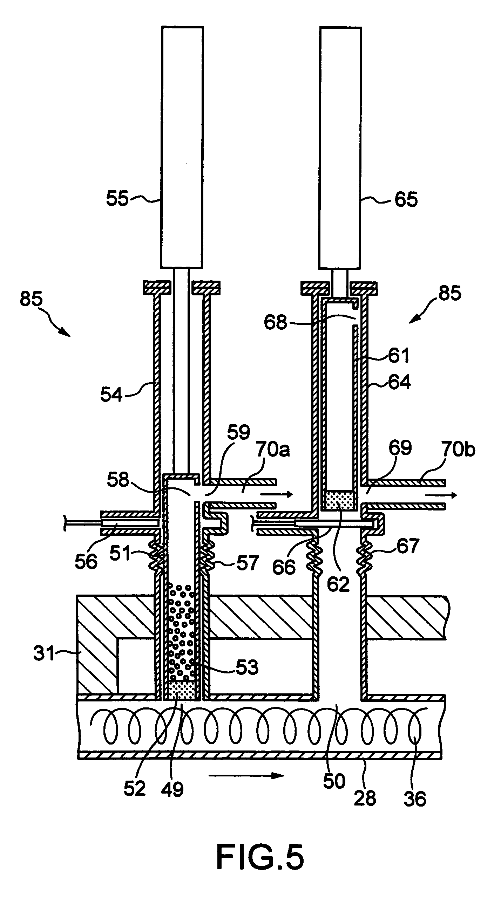

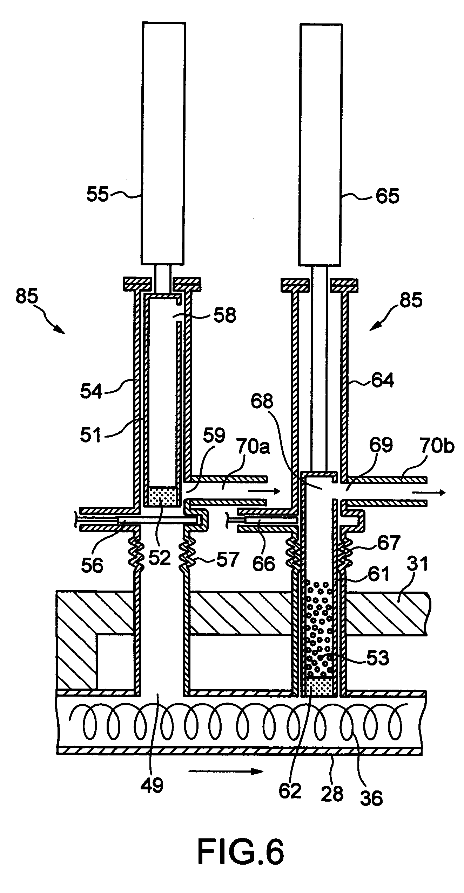

As in a state shown in FIG. 5, the alkali in the pipe 61 can be exchanged while evacuating the inside of the main body of the vacuum heating apparatus 16 through the pipe 51. And as in a state shown in FIG. 6, the alkali in the pipe 51 can be exchanged while evacuating the inside of the vacuum heater body 16 through the pipe 61. Thereby, the vacuum heating apparatus 3 can be continuously operated.

Here, as shown in FIG. 1, the exhaust ports 59 and 69, respectively, are connected to the pipes 70a and 70b. The pipes 70a and 70b are connected to the pipe 70. The pipe 70 is communicated with an alkali reactor 71, a condenser 72, a vacuum pump 73, a blower 74 and a catalytic oxidation device 75 in this order. The pipes 70a and 70b are connected to the pipe 70d. The opening valves 70c and 70d are used for example when the alkali in the pipe of the respective retorts 85 is exchanged.

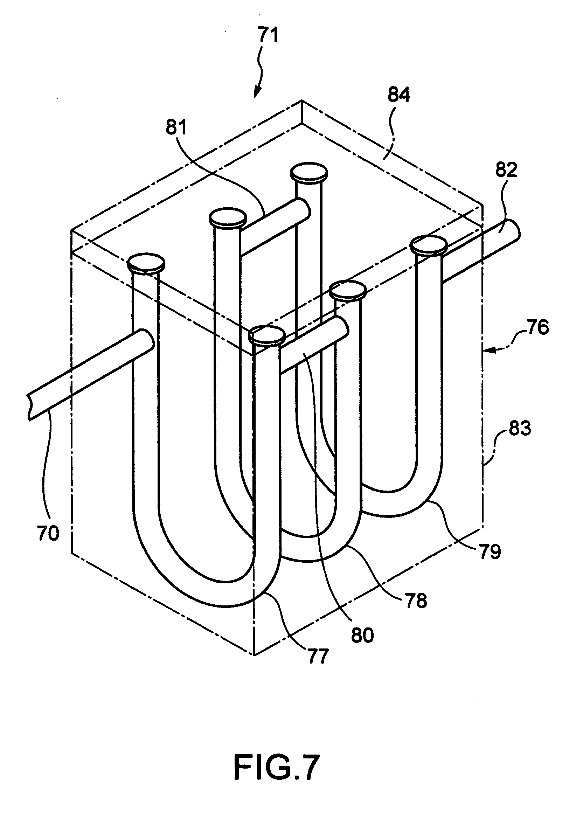

FIG. 7 is a diagram showing a structure of a alkali reactor 71.

The alkali reactor 71 can be constructed by connecting three U-shaped pipes 77, 78 and 79 in the casing 76. The pipe 70 is connected to an upper portion of the other side of a pipe 77. An upper portion of one side of the pipe 77 and an upper portion of one side of the pipe 78 are connected through a pipe 80, and an upper portion of the other side of the pipe 78 and an upper portion of the other side of the pipe 79 are connected through the pipe 81. To an upper portion of one side of the pipe 79, a pipe 82 is connected, and the pipe 82 is extended to the condenser 72. In place of the pipes 80 and 81, a metal bellows may be used. Thereby, for example, the expansion and contraction caused by heat expansion can be absorbed and sealability thereof can be improved.

The casing 76 has a body 83 having an opening at an upper portion and a cap 84 that closes an upper opening of the body 83. The inside of the cases 76 is heated by use of a heating means such as a heater (not shown in the drawing). The heater may be disposed, for example, downward of the U-shaped pipes 77, 78 and 79 in the casing 76, or may be disposed so as to cover above the U-shaped pipes 77, 78 and 79, or may be disposed so as to surround entire U-shaped pipes 77, 78 and 79. Further, the cap 84 may not be disposed. Thereby, since the opening and closing of the cap 84 become unnecessary, the operability is improved.

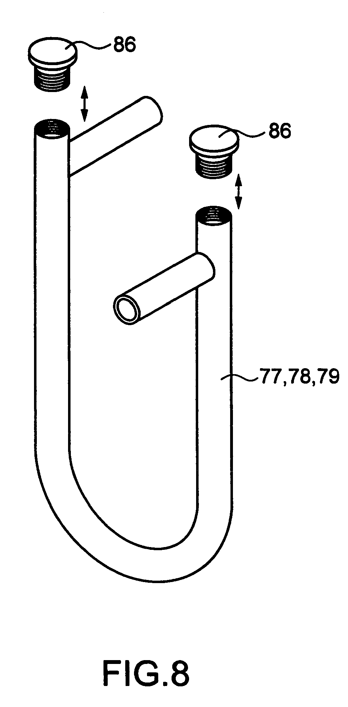

Caps 86 are detachably attached at upper ends of each of the U-shaped pipes 77, 78 and 79 as shown in FIG.8. The caps 86 are removed from each of the pipes 77, 78 and 79, alkali 87 can be inputted in a passage of each of the pipes 77, 78 and 79, and alkali 87 can be removed from the passage of each of the pipes 77, 78 and 79. As the alkali 87, solid-state alkali (for example, calcined lime (CaO)) is filled. Thereby, halogens such as chlorines derived from organic halides can be surely neutralized and fixed as salts.

The condenser 72 cools and condenses alkanes or the like derived from the object to be treated. For example, gas introduced from the alkali reactor 71 is indirectly heat exchanged with a cooling medium such as cooling water or liquid nitrogen to condense. In particular, when a gas is efficiently heat-exchanged and condensed at a low temperature, the reaction product can be captured as much as possible, and mercury, lead or arsenic contained in the agricultural chemicals can be captured.

The vacuum pump 73 reduces pressure inside the main body of vacuum heating apparatus 16 and a passage connected thereto in series and constituted of the retort 85, the alkali reactor 71 and the condenser 72 to for example 0.5 to 2000Pa and more preferably to substantially 0.5 to 1000Pa.

The catalytic oxidation device 75 oxidizes an exhaust gas of the vacuum pump 73 with a catalyst. This is used to apply double safety (fail-safe).

In addition, in the case of the agricultural chemical being chlordane, as much as substantially 50% by weight of illuminating kerosene is contained. The kerosene (primary ingredient is alkane) is condensed and recovered with a cooler. However, when there is contained such a large amount of alkane, in some cases, it is difficult to condense all. In such a case, a dry vacuum pump such as a Roots pump can be preferably used. Thereby, evaporated components such as illuminating kerosene in particular can be prevented from mixing with oil of the vacuum pump.

The purge chamber 18 shown in FIG. 1 has an input port 88 connected to the exhaust port 35 of the cooling device 30 and an exhaust port 89 of the object to be treated. The input port 88 and the exhaust port 89 are provided with gate valves 90 and 91 respectively. The exhaust port 89 is provided with a rotary valve 92 for continuously exhausting the object to be treated to outside. The purge chamber 18 is connected to a vacuum pump 93.

With thus configured processing apparatus 1, the object to be treated is processed as follows:
(1) As a preceding step of the process, by use of sieve selection, debris such as concrete or the like is removed from the object to be treated to select fine soil.
(2) The selected object to be treated is inputted in the vacuum drying furnace 2 to remove water content or the like from the object to be treated in the vacuum drying furnace 2.
(3) The object to be treated from which the water or the like is removed is inputted in the vacuum heating apparatus 3, and the vacuum heating apparatus 3 thermally decomposes agricultural chemicals contained in the object to be treated. Among thermally decomposed components, halogens such as chlorines are neutralized and fixed as salts by means of the retort 85 and the alkali reactor 71.

In the processing apparatus 1 according to the present embodiment, the retort 85 in which alkali can be filled is disposed to be capable of being pulled out and inserted in to a passage of the vacuum heating apparatus 3 where agricultural chemicals are thermally decomposed. Accordingly, since a distance between the vacuum heating apparatus 3 and the alkali can be minimized, a zone where the thermally decomposed components of the agricultural chemicals are recomposed into agricultural chemicals or dioxins is almost eliminated. As a result, the contamination owing to the re-composition thereof can be prevented. Furthermore, by parallel use of two pairs of retorts 85, while continuously processing, the alkali can be exchanged. Accordingly, the throughput can be improved. (The second embodiment)

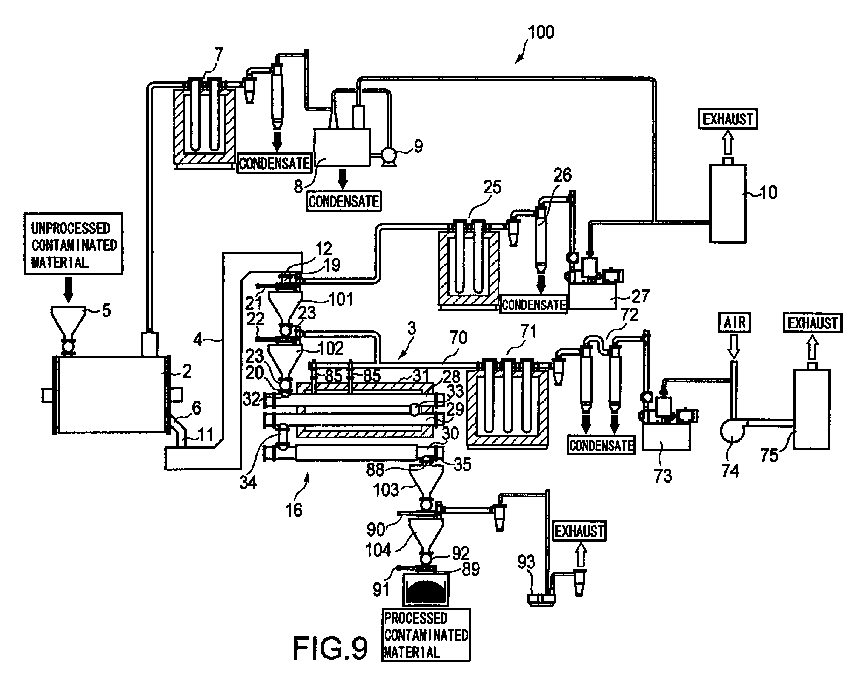

FIG. 9 is a diagram showing a configuration of a processing apparatus according to a first embodiment of the invention.

The processing apparatus 1 shown in FIG. 1 has one purge chamber 17. A processing apparatus 100 according to this embodiment has two purge chambers 101 and 102 disposed in series. Here, pressure inside of the second purge chamber is reduced using the vacuum pump 73. The processing apparatus 1 shown in FIG. 1 has one purge chamber 18. A processing apparatus 100 according to this embodiment has two purge chambers 103 and 104 disposed in series.

In the processing apparatus 1 shown in FIG. 1, in the vacuum heating apparatus 3, a continuous process can be applied in batch. In the processing apparatus 100 according to the embodiment, since a waiting time in the purge chambers 102 and 103 diminishes, the object to be treated can be more or less processed continuously in the vacuum heating apparatus 3, thus the throughput thereof can be improved.
In the processing apparatus 100, in place of disposing the purge chambers 101 and 102 in serial two stages, the purge chamber 101 may be used in an upper stage and not the purge chamber 102 but a simple reserving chamber may be used in a lower stage. In other words, since the reserving chamber does not need the gate valve 20, the number of parts can be reduced.

### (Other embodiment)

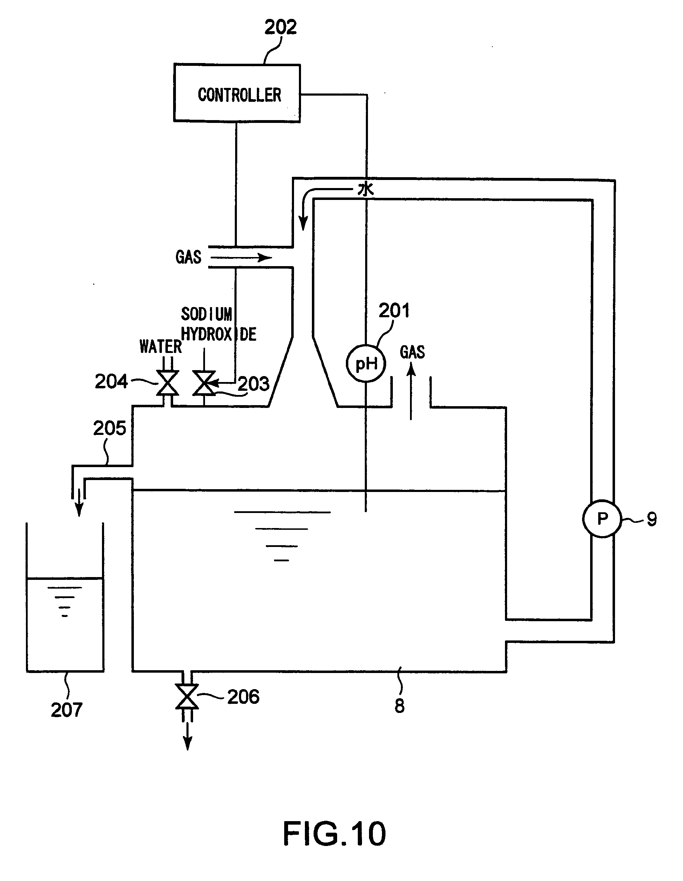

FIG. 10 is a diagram showing another example of an ejector pump (one shown with reference numerals 8 and 9 in FIG. 1).
As shown in FIG. 10, in the example, a pH-meter 201 is disposed to the condensing device 8, and a controller 202 injects, based on a measurement result with the pH-meter 201, sodium hydroxide from a sodium hydroxide injection port 203 to the condensing device 8 to accurately neutralize the liquid in the condensing device 8. Reference numerals in the drawing 204 represent an injection port of water, 205 and 206, and 207 represent drains and 207 is a reservoir of wastewater from the drain 205.

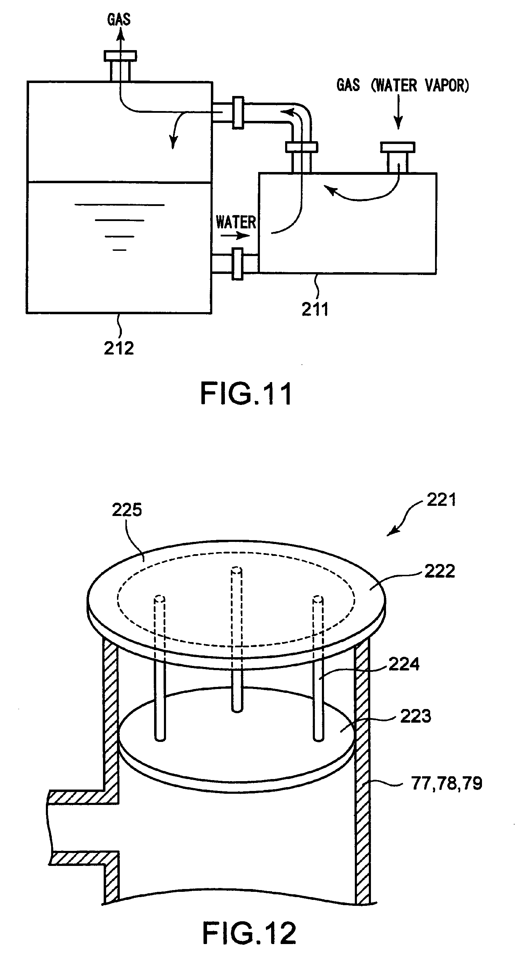

Furthermore, as the vacuum pumps 27 and 73 shown in FIG. 1 or the like, a water sealing pump may be used. FIG. 11 is a diagram showing an example of the water sealing pump. In FIG. 11, reference numeral 211 denotes a main body of the water sealing pump and reference numeral 212 denotes a tank for circulating water.
That is, since large volume of water vapor is generated in the vacuum heating apparatus 3 and large volume of condensed water sticks to the pipe that causes corrosion of the seal portion, the sealing property deteriorates. In this connection, by using the water sealing pump as a vacuum pump, water can be condensed without adding other elements. When a configuration of neutralization control shown in FIG. 10 is applied to a tank 212, the neutralization of the condensed water can be carried out more precisely.

Furthermore, as shown in FIG. 8, at upper ends of the respective U-shaped pipes 77, 78 and 79, caps 86 are detachably attached respectively. However, as shown in FIG. 12, a cap 221 may be constituted into a dual structure. In FIG. 12, reference numeral 222 denotes an external cap, reference numeral 223 denotes an internal cap and reference numeral 224 denotes a joint member connecting the external cap 222 and the internal cap 223. Like this example, as the cap 221 is structured into a dual structure, radiation of heat can be prevented more effectively. In FIG. 12, reference numeral 225 denotes a sealing gasket.
The caps 86 and 221 may be fastened to a flange, not by screwing, with a bolt and a nut.

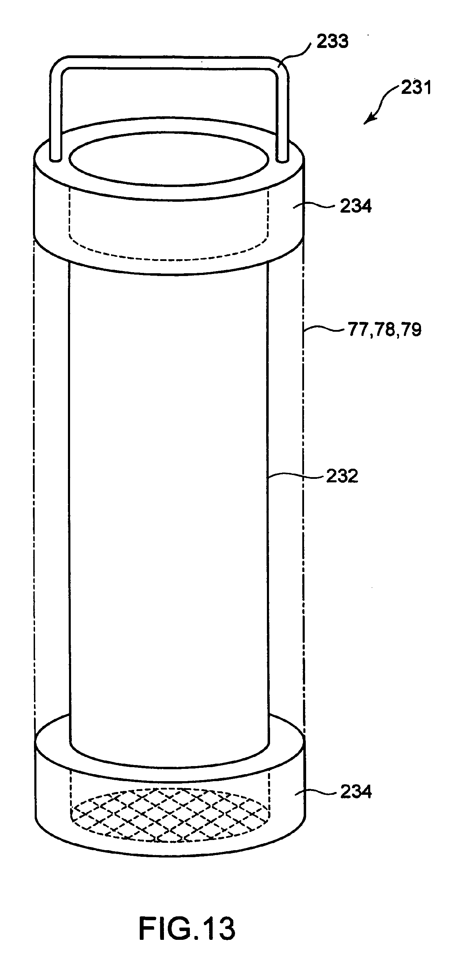

Furthermore, as shown in FIG. 8, the alkali 87 is directly inputted in the passage of the pipes 77, 78 and 79 and taken out of the inside of passage of the pipes 77, 78 and 79. However, as shown in FIG. 13, a basket 231 may be used. The basket 231 is formed into a bottomed cylinder with a meshed bottom or many holes opened at the bottom and includes a body 232 where alkali 87 is reserved, a handle 233 and sealing portions 234 disposed above and below an outer periphery of the cylinder. The sealing portions 234 are made of, for example, ceramic fibers, inserted in the pipes 77, 78 and 79, and when heated, expand to seal between an outer periphery of the body and an inner periphery of the pipes 77, 78 and 79. When such a basket 231 is used, an inputting operation of the alkali 87 can be carried out efficiently.

### BRIEF DESCRIPTION OF THE DRAWINGS

FIG. 1 is a diagram showing a configuration of a processing apparatus of an agricultural chemical according to a first embodiment of the invention.
FIG. 2 is a diagram showing a configuration of a purge chamber shown in FIG. 1.
FIG. 1 is a sectional view showing specific configuration of the first heating furnace 28.

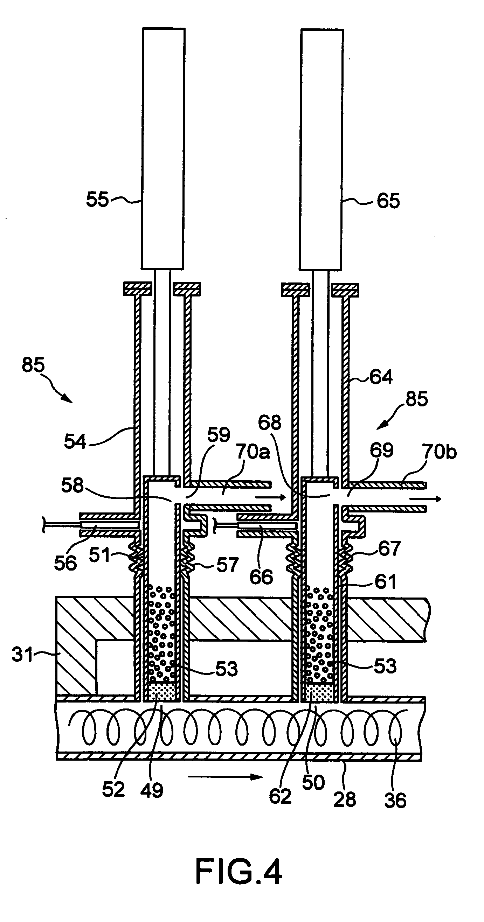

FIG. 4 is a diagram showing a configuration of a retort (part 1).
FIG. 5 is a diagram showing a configuration of a retort (part 2).
FIG. 6 is a diagram showing a configuration of a retort (part 3).
FIG. 7 is a diagram showing a configuration of an alkali reactor.
FIG. 8 is a diagram showing a configuration of a U-shape pipe of the alkali reactor.
FIG. 9 is a diagram showing a configuration of a processing apparatus of an agricultural chemical according to a second embodiment of the invention.
FIG. 10 is a diagram showing another example of an ejector pump.
FIG. 11 is a diagram showing one example of the water sealing pump.
FIG. 12 is a diagram showing another example of a cap.
FIG. 13 is a diagram showing an example where a basket is used to input an alkali.

### EXPLANATION OF CODES

- 1: Processing apparatus
- 2: Vacuum drying furnace
- 3: Vacuum heating apparatus
- 4: Conveyor
- 7: Alkali reactor
- 8: Condensing device
- 9: Pump
- 10: Gas exhaustion processing unit
- 16: Main body of vacuum heating apparatus
- 17, 18: Purge chamber
- 21, 22: Gate valve
- 23: Rotary valve
- 24: Alkali reactor
- 25: Alkali reactor
- 26: Condensing device
- 27: Vacuum pump
- 28: First heat treatment furnace
- 29: Second heat treatment furnace
- 30: Cooling device
- 31: Casing
- 49, 50: Passage
- 51, 61: Pipe
- 53: Alkali reactor
- 54, 64: Casing
- 56, 66: Sheilding door
- 71: Alkali reactor
- 72: Condensing device
- 73: Vacuum pump
- 74: Blower
- 75: Catalytic oxidation device
- 85: Retort

## Claims

1. A processing apparatus, comprising:
a processing chamber, capable of being hermetically sealed, an object to be treated containing organic halides being introduced thereto;
a heating means that heats at least a part of an inside of the processing chamber;
an exhausting system for exhausting the processing chamber; and
a first alkali reaction portion disposed to at least a part of a zone of the exhausting system capable of inserting an alkali to an inside of the exhausting system: the first alkali reaction portion is capable of being inserted and pulled out from an outside.

2. The pressure controlling apparatus as set forth in claim 1,
wherein the first alkali reaction portion has an alkali heating means in the exhausting system.

3. A processing apparatus, comprising:
a processing chamber, capable of being hermetically sealed, having a first passage that communicates between an inside and an outside of the processing chamber, an object to be treated containing an organic halides being introduced thereto;
a heating means that heats at least a part of an inside of the processing chamber;
a first pipe, capable of being pulled out and inserted in to the first passage from the outside of the processing chamber and communicates with the first passage when being inserted into the first passage, having a first path capable of being filled with an alkali;
a first shielding member capable of shielding the first passage when the first pipe is pulled out of the first passage; and
a first pressure reducing means capable of reducing pressure inside of the processing chamber through the first path.

4. The processing apparatus as set forth in claim 3,
wherein the processing chamber has a second passage communicating between the inside and the outside of the chamber;
wherein the processing apparatus has:
a second pipe, capable of being pulled out and inserted into from the outside of the processing chamber to the second passage and communicates with the second passage when being inserted into the second passage, having a second path capable of being filled with the alkali, and
a second shielding member capable of shielding the second passage when the second pipe is pulled out of the second passage,
wherein the first pressure reducing means is capable of reducing pressure inside the processing chamber through the second path.

5. The processing apparatus as set forth in claim 3 or 4, further comprising:
a third path, being inserted between at least one of the first path and the second path and the first pressure reducing means, which is filled with the alkali.

6. The processing apparatus according to any one of claims 3, 4 and 5,
wherein at least one of the first passage and the second passage is disposed on an upper surface side of the processing chamber.

7. The processing apparatus according to any one of claims 3, 4, 5 and 6,
wherein the processing chamber has:
a third pipe having a first input port on a first end side for inputting an object to be treated,
a first screw disposed inside the third pipe,
a supporting means that supports the third pipe at the first end side, and
a driving system of the first screw disposed towards the supporting means side of the third pipe.

8. The processing apparatus as set forth in claim 7, further comprising:
a fourth pipe disposed so as to be approximately parallel to the third pipe at a position lower than the third pipe and a third end side of the fourth pipe is connected to the second end side opposite to the first end side of the third pipe;
a second screw disposed inside of the fourth pipe: and
a supporting means that cantilever supports the first end side of the third pipe and the fourth end side opposite to the third end side of the fourth pipe.

9. The processing apparatus according to any one of claims 3, 4, 5, 6, 7 and 8, further comprising:
means for mixing alkali with the object to be treated that is introduced in the processing chamber.

10. A method of processing an object to be treated containing organic halides:
introducing the object to be treated into a processing zone capable of being hermetically sealed;
inserting an alkali from an outside into at least a part of the zone of the exhausting system which reduces pressure of the processing zone: the alkali is capable of being inserted and pulled out from an outside; and
heating the processing zone while reducing pressure in the processing zone through the alkali inserted into the exhausting system.

11. A method of producing an innoxious object from an object to be treated containing organic halides:
introducing the object to be treated into a processing zone capable of being hermetically sealed;
inserting an alkali from an outside into at least a part of the zone of the exhausting system which reduces pressure of the processing zone; and
heating the processing zone while reducing pressure in the processing zone;
